(19)

Europäisches
Patentamt
European
Patent Office
Office européen
des brevets

(11) **EP 1 950 229 A1**

(12) **EUROPEAN PATENT APPLICATION**
published in accordance with Art. 158(3) EPC

(43) Date of publication:
**30.07.2008 Bulletin 2008/31**

(21) Application number: **06822103.5**

(22) Date of filing: **24.10.2006**

(51) Int Cl.:
**C08F 14/26** (2006.01)          **C01B 31/00** (2006.01)
**C08K 7/04** (2006.01)          **C08L 27/18** (2006.01)

(86) International application number:
**PCT/JP2006/321123**

(87) International publication number:
**WO 2007/049591 (03.05.2007 Gazette 2007/18)**

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **25.10.2005   JP 2005309807**

(71) Applicants:
• **Bussan Nanotech Research Institute Inc.**
  **Tokyo 100-0004 (JP)**
• **MITSUI & CO., LTD.**
  **Tokyo 100-0004 (JP)**

(72) Inventors:
• **HANDA, Koichi**
  **Tokyo 100-0004 (JP)**

• **Subiantoro**
  **Tokyo 100-0004 (JP)**
• **TSUKADA, Takayuki**
  **Tokyo 100-0004 (JP)**
• **OKUBO, Tsuyoshi**
  **Tokyo 100-0004 (JP)**
• **SHAN, Jiayi**
  **Tokyo 100-0004 (JP)**
• **YAMAUCHI, Akira**
  **Tokyo 100-0004 (JP)**
• **NAGASHIMA, Manabu**
  **Tokyo 100-0004 (JP)**

(74) Representative: **Brykman, Georges**
  **Osha Liang
  121, Avenue des Champs Élysées
  75008 Paris (FR)**

(54) **MOLDED FLUORORESIN**

(57)     The disclosed is a fluorine resin molded article which is produced by molding a mixed powder comprising fluorine resin powder and carbon fibrous structures into an article and baking the article, wherein the carbon fibrous structure comprises a three dimensional network of carbon fibers each having an outside diameter of 15 - 100 nm, wherein the carbon fibrous structure further comprises a granular part with which the carbon fibers are tied together in the state that the concerned carbon fibers are externally elongated therefrom, and wherein the granular part is produced in a growth process of the carbon fibers. With focusing an attention on a substance which gives conductivity to the fluorine resin molded article, a new fluorine resin molded article is provided.

FIG. 4A

**Description**

**TECHNICAL FIELD**

This invention relates to a fluorine resin molded article which is produced by molding a mixed powder including fluorine resin powder and carbon fibrous structures into an article and baking the article. Particularly, this invention relates to a fluorine resin molded article in which carbon fibrous structures, each of which is flexible, has high strength, and shows a tough specific configuration, are contained.

**BACKGROUND ART**

Fluorine resins such as polytetrafluoroetylene (PTFE) excel in heat resistance, chemical resistance, etc. For instance, it is used for tubes for semiconductor manufacturing apparatus, and tanks for liquid chemicals, etc. However, since the fluorine resins, per se, are of electric non-conductance, and tends to be easily charged, the fluorine resins can not be used, as it is, for the applications where the static electricity is avoided. In addition, there is a problem that the dusts in ambient atmosphere are attracted to the charged fluorine resin.

As a method for preventing the fluorine resin from charging, methods for giving electrical conductivity by adding filler of high conductivity are known. For example, in Patent Literature 1, a fluorine resin molded article which is obtained by mixing a powder blend which includes the carbon black and fluorine resin powder in the melted state thereof, and molding the mixture, and in which the carbon black is dispersed in the fluorine resin is proposed.

[Patent Literature 1] JP 2003-82187 A

**DISCROSURE OF THE INVENTION**

**PROBLEMS TO BE SOLVED BY THIS INVENTION**

In the case that the carbon black is used as conductive filler, however, a relatively large amount of the carbon black is necessitated for the sake of getting a prescribed conductivity. The more the carbon black is added, the higher the risk of disassociating the carbon black from the fluorine resin molded article arises. Thus, a fear of polluting the external environment comes up.

Recently, it has been also studied that the carbon fibers are used as the conductive filler instead of the carbon black.

However, even in this case, a relatively large amount of the carbon fibers are necessitated for the sake of getting a prescribed conductivity. Thus, there is a problem that the inherent physical properties of the fluorine resin are deteriorated. In addition, the carbon fiber is currently manufactured by subjecting a precursor organic polymer, particularly, a continuous filament of cellulose or polyacrylonitrile, to thermal decomposition under a controlled condition, in which a forced tension on the precursor polymer is carefully maintained in order to achieve a good orientation of anisotropic sheets of carbon in the final product. In such manufacturing processes, the level of material loss during carbonization is high and the carbonization rate is slow. Therefore, carbon fibers made by these processes tend to be expensive.

In recent years, a different class of carbon fibers, known as urtrathin carbon fibers such as carbon nano structures, exemplified by the carbon nanotubes (hereinafter, referred to also as "CNT"), has become a focus of attention.

The graphite layers that make up the carbon nano structures are materials normally comprised of regular arrays of six-membered ring carbon networks, which bring about unique electrical properties, as well as chemical, mechanical, and thermal stabilities. As long as such fine carbon fibers can retain such properties upon blending and dispersion in a solid material, including various resins, ceramics, metals, etc., or in liquid materials, including fuels, lubricant agents, etc., their usefulness as additives for improving material properties can be expected. Further, it can be also fully considered that such fine carbon fibers are used as the conductive filler to be added to the fluorine resin.

On the other hand, however, such fine carbon fibers unfortunately show an aggregate state even just after their synthesis. When these aggregates are used as-is, the fine carbon fibers would be poorly disperse in the fluorine resin, and thus there is a fear that the product obtained may have inferior property. Accordingly, given a desired property such as electric conductivity for the fluorine resin, it is necessary that the fine carbon fibers would be added in a large amount.

Therefore, this invention is made under such circumstances and with focusing our attention on a substance which gives conductivity to the fluorine resin molded article, and this invention aims mainly to provide a new fluorine resin molded article which contains the novel conductivity giving substance, and shows a superior conductivity as compared with one which contains the same amount of a conventional conductivity giving substance, or shows a sufficient conductivity when the additive amount of the novel conductivity giving substance is substantially decreased as compared with the amount used for the conventional conductivity giving substance, and which owns substantially no risk of disassociating the conductivity giving substance from the fluorine resin molded article.

**MEANS FOR SOLVING THE PROBLEMS**

As a result of our diligent study for solving the above problems, we, the inventors, have found that, in order to give adequate electrical properties even in a small adding amount, the effective things are to adapt carbon fibers having a diameter as small as possible; to make an sparse structure of the carbon fibers where the fibers are mutually combined tightly so that the fibers do not behave individually and which sustains their sparse state in the fluorine resin; and to adapt as the carbon fibers per se ones which are designed to have a minimum amount of defects, and finally, we have accomplished the present invention.

The present invention to solve the above mentioned problems is, therefore, a fluorine resin molded article which is produced by molding a mixed powder including fluorine resin powder and carbon fibrous structures into an article and baking the article, wherein the carbon fibrous structure comprises a three dimensional network of carbon fibers each having an outside diameter of 15 - 100 nm, wherein the carbon fibrous structure further comprises a granular part with which the carbon fibers are tied together in the state that the concerned carbon fibers are externally elongated therefrom, and wherein the granular part is produced in a growth process of the carbon fibers.

In the present invention, it is preferable that the carbon fibrous structures have an area-based circle-equivalent mean diameter of 50 - 100 $\mu$m.

In the present invention, it is preferable that the carbon fibrous structures have a bulk density of 0. 0001 - 0.05g/cm$^3$.

In the present invention, it is preferable that the carbon fibrous structures have an $I_D/I_G$ ratio determined by Raman spectroscopy of not more than 0.2.

In the present invention, it is preferable that the carbon fibrous structures have a combustion initiation temperature in air of not less than 750 °C.

In the present invention, it is preferable that the particle diameter of the granular part at a binding portion for carbon fibers is larger than the outside diameters of the carbon fibers.

In the present invention, it is preferable that the carbon fibrous structures are produced using as carbon sources of at least two carbon compounds, which have mutually different decomposition temperatures.

Further, in the present invention, it is preferable that the carbon fibrous structures are contained at a rate of 0.01 - 30.0 % by weight based on the total weight of the fluorine resin molded article.

In the present invention, it is preferable that the fluorine resin powder comprises large diameter particles' ingredient of not less than 100 $\mu$m in diameter, and small particles' ingredient of less than 100 $\mu$m in diameter, at a ratio of 5 -100 % by weight large particles to the remainder small particles, based on the total weight of the fluorine resin powder.

Further, in the present invention, it is preferable that the large diameter particles have a diameter of 100 - 1000 $\mu$m.

In addition, in the present invention, it is preferable that the fluorine resin powder is at least one kind of powder selected from the group consisting of polytetrafluoroethylene, modified polytetrafluoroethylene which is prepared by copolymerizing perfluoroalkoxy divinyl ether with the polytetrafluoroethylene, and modified polytetrafluoroethylene which is prepared by copolymerizing hexafluoropropylene with the polytetrafluoroethylene.

**EFFECT OF THE INVENTION**

According to the present invention, since the fluorine resin molded article uses the carbon fibrous structures as the conductivity giving material, and the carbon fibrous structure used is one comprising carbon fibers of a ultrathin diameter which are configured three dimensionally, and are bound tightly together by a granular part produced in a growth process of the carbon fibers so that the concerned carbon fibers are externally elongated from the granular part, the carbon fibrous structures can disperse promptly into the fluorine resin even at a small additive amount, while they maintain such a bulky structure. Thus, even when the carbon fibrous structures are added at a small amount to the fluorine resin, the fine carbon fibers can be distributed uniformly over the fluorine resin. Therefore, it is possible to obtain good electric conductive paths throughout the fluorine resin, and thus to improve the electrical conductivity adequately. With respect to the mechanical and thermal properties, improvements can be expected in analogous fashions, since the fine carbon fibers as fillers are distributed evenly over the fluorine resin.

Furthermore, when the fluorine resin powder which contains the large diameter particles' ingredient of not less than 100 $\mu$m in diameter at a rate of 5 - 100 % by weight based on the total weight of the fluorine resin is used, on the blending with the carbon fibrous structures, many of the carbon fibrous structures comes to be positioned at the contacting interfaces between the large diameter particles. As a result, the formation of the conductive paths owing to the contacts between the carbon fibrous structures becomes easy, and thus, it is possible to attain a further improvement of the conductivity as compared with the conventional formed article.

**BRIEF DESCRIPTION OF THE DRAWINGS**

[Fig. 1] is a scanning electron micrograph (SEM photo) of an intermediate for the carbon fibrous structure which is used for the fluorine resin molded article according to the present invention.

[Fig. 2] is a transmission electron micrograph (TEM photo) of an intermediate for the carbon fibrous structure which is used for the fluorine resin molded article according to the present invention.

[Fig. 3] is a scanning electron micrograph (SEM photo) of a carbon fibrous structure which is used for the fluorine resin molded article according to the present invention.

[Fig. 4A] and [Fig. 4B] are transmission electron micrographs (TEM) of carbon fibrous structures which are used for the fluorine resin molded article according to the present invention.

[Fig. 5] is a scanning electron micrograph (SEM photo) of a carbon fibrous structure which is used for the fluorine resin molded article according to the present invention.

[Fig. 6] is an X-ray diffraction chart of a carbon fibrous structure which is used for the fluorine resin molded article according to the present invention and an intermediate thereof.

[Fig. 7] is Raman spectra of a carbon fibrous structure which is used for the fluorine resin molded article according to the present invention and an intermediate thereof

[Fig. 8] is a schematic diagram which illustrates a generation furnace used for manufacturing the carbon fibrous structures in an example of the present invention.

**EXPLANATION OF NUMERALS**

1 Generation furnace
2 Inlet nozzle
3 Collision member
4 Raw material mixture gas supply port
a Inner diameter of inlet nozzle
b Inner diameter of generation furnace
c Inner diameter of Collision member
d Distance from upper end of generation furnace to raw material mixture gas supply port
e Distance from raw material mixture gas supply port to lower end of collision member
f Distance from raw material mixture gas supply port to lower end of generation furnace

**BEST MODE FOR CARRYING OUT THE INVENTION**

Now, the present invention will be described in detail with reference to some embodiments.
The fluorine resin molded article according to this invention is produced by molding a mixed powder including fluorine resin powder and carbon fibrous structures into an article and baking the article.

(1) Carbon fibrous structure

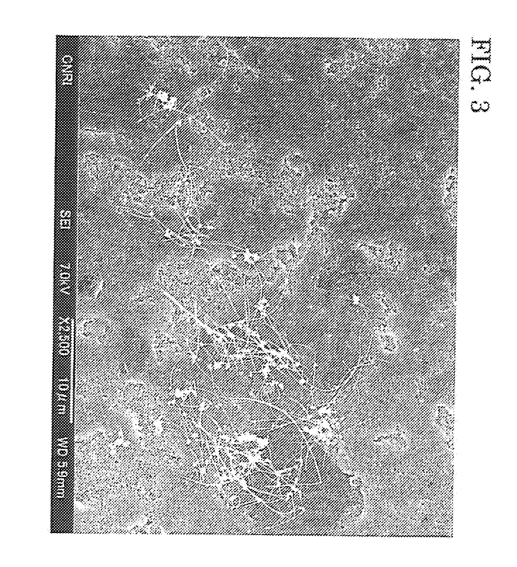

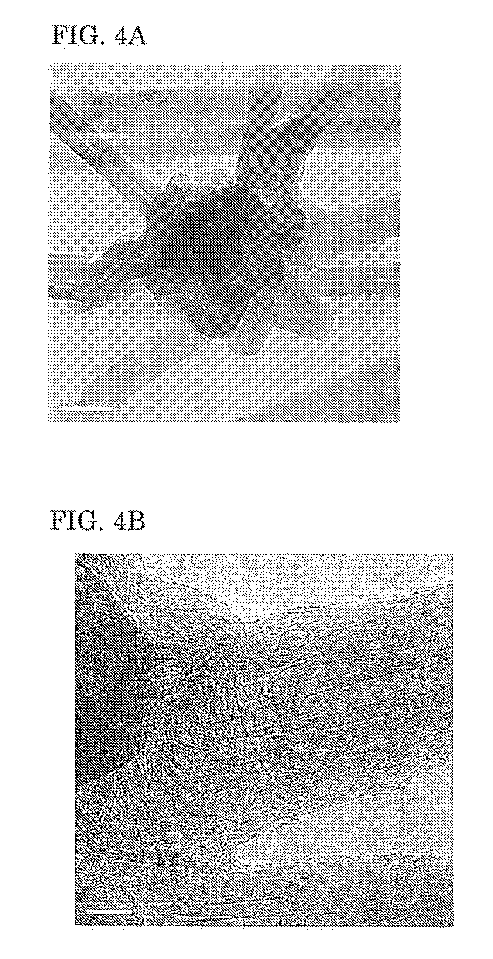

First, the carbon fibrous structure which constitutes the fluorine resin molded article according to the present invention will be described in detail.
Each carbon fibrous structure to be used in the present invention is, as shown in SEM photo of Fig. 3 and TEM photos of Fig. 4A and 4B, composed of a thee-dimensionally network of carbon fibers each having an outside diameter of 15 - 100 nm, and a granular part with which the carbon fibers are bound together so that the concerned carbon fibers elongate outwardly from the granular part.

The reason for restricting the outside diameter of the carbon fibers which constitutes the carbon fibrous structure to a range of 15 nm to 100 nm is because when the outside diameter is less than 15 nm, the cross-sections of the carbon fibers do not have polygonal figures as described later. According to physical properties of the carbon fiber, the smaller the diameter of a fiber, the greater the number of carbon fibers will be for the same weight and/or the longer the length in the axial direction of the carbon fiber. This property would be followed by an enhanced electric conductivity. Thus, carbon fibrous structures having an outside diameter exceeding 100 nm are not preferred for use as the conductivity giving material for the fluorine resin. Particularly, it is more desirable for the outside diameter of the carbon fibers to be in the range of 20 - 70 nm. Carbon fibers that have a diameter within the preferable range and whose tubular graphene sheets are layered one by one in the direction that is orthogonal to the fiber axis, i.e., being of a multilayer type, can enjoy a high flexural rigidity and ample elasticity. In other words, such fibers would have a property of being easy to restore their original shape after undergoing any deformation. Therefore, even if the carbon fibrous structures have been compressed prior to being mixed into the fluorine resin, they tend to take a sparse structure in the matrix.

Incidentally, when annealing at a temperature of not less than 2400°C, the spacing between the layered graphene sheets becomes lesser and the true density of the carbon fiber is increased from 1.89 g/cm$^3$ to 2.1 g/cm$^3$, and the cross sections of the carbon fiber perpendicular to the axis of carbon fiber come to show polygonal figures. As a result, the carbon fibers having such constitution become denser and have fewer defects in both the stacking direction and the surface direction of the graphene sheets that make up the carbon fiber, and thus their flexural rigidity (EI) can be enhanced.

Additionally, it is preferable that the outside diameter of the fine carbon fiber undergoes a change along the axial direction of the fiber. In the case that the outside diameter of the carbon fiber is not constant, but changed along the axial direction of the fiber, it would be expected that some anchor effect may be provided to the carbon fiber in the fluorine resin, and thus the migration of the carbon fiber in the fluorine resin can be restrained, leading to improved dispersion stability.

Then, in the carbon fibrous structure used in the present invention, fine carbon fibers having a predetermined outside diameter and being configured three dimensionally are bound together by a granular part produced in a growth process of the carbon fibers so that the carbon fibers are elongated outwardly from the granular part. Since multiple carbon fibers are not only entangled each other, but tightly bound together in the granular part, the carbon fibers will not disperse as single fibers, but will be dispersed as intact bulky carbon fibrous structures when added to the fluorine resin. Since the fine carbon fibers are bound together by a granular part produced in the growth process of the carbon fibers in the carbon fibrous structure to be used in the present invention, the carbon fibrous structure itself can enjoy superior properties such as electric property. For instance, when determining electrical resistance under a certain pressed density, the carbon fibrous structure to be used in the present invention shows an extremely low resistivity, as compared with that of a simple aggregate of the fine carbon fibers and that of the carbon fibrous structures in which the fine carbon fibers are fixed at the contacting points with a carbonaceous material or carbonized substance therefrom after the synthesis of the carbon fibers. Thus, when the carbon fibrous structures added and distributed in the fluorine resin, they can form good conductive paths within the matrix.

Since the granular part is produced in the growth process of the carbon fibers as mentioned above, the carbon - carbon bonds in the granular part are well developed. Further, the granular part appears to include mixed state of sp$^2$- and sp$^3$- bonds, although it is not clear accurately. After the synthesis process (in the "intermediate" or "first intermediate" defined hereinafter), the granular part and the fibrous parts are continuous mutually because of a structure comprising patch-like sheets of carbon atoms laminated together. Further, after the high temperature treatment, at least a part of graphene layers constituting the granular part is continued on graphene layers constituting the fine carbon fibers elongated outwardly from the granular part, as shown in Figs. 4A and 4B. In the carbon fibrous structure according to the present invention, as symbolized by such a fact that the graphene layers constituting the granular part is continued on the graphene layers constituting the fine carbon fibers, the granular part and the fine carbon fibers are bound together (at least in a part) by carbon crystalline structural bonds. Thus, strong couplings between the granular part and each fine carbon fiber are produced.

With respect to the carbon fibers, the condition of being "extended outwardly" from the granular part used herein means principally that the carbon fibers and granular part are linked together by carbon crystalline structural bonds as mentioned above, but does not means that they are apparently combined together by any additional binding agent (involving carbonaceous ones).

As traces of the fact that the granular part is produced in the growth process of the carbon fibers as mentioned above, the granular part has at least one catalyst particle or void therein, the void being formed due to the volatilization and elimination of the catalyst particle during the heating process after the generation process. The void (or catalyst particle) is essentially independent from hollow parts which are formed in individual fine carbon fibers which are extended outwardly from the granular part (although, a few voids which happened to be associated with the hollow part may be observed).

Although the number of the catalyst particles or voids is not particularly limited, it may be about 1 - 1000 a granular particle, more preferably, about 3 - 500 a granular particle. When the granular part is formed under the presence of catalyst particles the number of which is within the range mentioned above, the granular part formed can have a desirable size as mentioned later.

The per-unit size of the catalyst particle or void existing in the granular particle may be, for example, 1 - 100 nm, preferably, 2 - 40 nm, and more preferably, 3-15 nm.

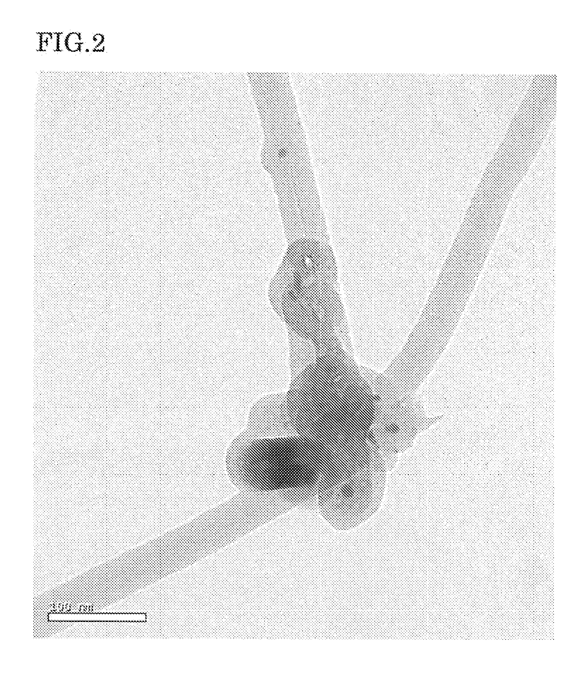

Furthermore, it is preferable that the diameter of the granular part is larger than the outside diameter of the carbon fibers as shown in Fig.2, although it is not specifically limited thereto. Concretely, for example, the diameter of granular part is 1.3 - 250 times larger than the outside diameter of the carbon fibers, preferably 1.5 - 100 times, and more preferably, 2.0 - 25 times larger, on average. When the granular part, which is the binding site of the carbon fibers, has a much larger particle diameter, that is, 1.3 times or more larger than the outer diameter of the carbon fibers, the carbon fibers that are elongated outwardly from the granular part have stronger binding force, and thus, even when the carbon fibrous structures are exposed to a relatively high shear stress during combining with the fluorine resin, they can be dispersed as maintaining its three-dimensional carbon fibrous structures into the matrix. When the granular part has an extremely larger particle diameter, that is, exceeding 250 times of the outer diameter of the carbon fibers, the undesirable possibility that the fibrous characteristics of the carbon fibrous structure are lost will arise. Therefore, the carbon fibrous structure will not be suitable for an additive agent to the fluorine resin, and thus it is not desirable. The "particle diameter of the granular part" used herein is the value which is measured by assuming that the granular part, which is the binding site for the mutual carbon fibers, is one spherical particle.

Although the concrete value for the particle diameter of the granular part will be depended on the size of the carbon fibrous structure and the outer diameters of the fine carbon fibers in the carbon fibrous structure, for example, it may be 20 - 5000 nm, more preferably, 25 - 2000 nm, and most preferably, 30 - 500 nm, on average.

Furthermore, the granular part may be roughly globular in shape because the part is produced in the growth process of the carbon fibers as mentioned above. On average, the degree of roundness thereof may lay in the range of from 0.2 to <1, preferably, 0.5 to 0.99, and more preferably, 0.7 to 0.98.

Additionally, the binding of the carbon fibers in the granular part is very tight as compared with, for example, that in the structure in which mutual contacting points among the carbon fibers are fixed with carbonaceous material or carbonized substance therefrom. It is also because the granular part is produced in the growth process of the carbon fibers as mentioned above. Even under such a condition as to bring about breakages in the carbon fibers of the carbon fibrous structure, the granular part (the binding site) is maintained stably. Specifically, for example, when the carbon fibrous structures are dispersed in a liquid medium and then subjected to ultrasonic treatment with a selected wavelength and a constant power under a load condition by which the average length of the carbon fibers is reduced to about half of its initial value as shown in the Examples described later, the changing rate in the mean diameter of the granular parts is not more than 10%, preferably, not more than 5%, thus, the granular parts, i.e., the binding sites of fibers are maintained stably.

In carbon fibrous structures to be used in the present invention, it is preferable that the carbon fibrous structure has an area-based circle-equivalent mean diameter of 50 - 100 $\mu$m, and more preferably, 60 - 90 $\mu$m. The "area-based circle-equivalent mean diameter" used herein is the value which is determined by taking a picture of the outside shapes of the carbon fibrous structures with a suitable electron microscope, etc., tracing the contours of the respective carbon fibrous structures in the obtained picture using a suitable image analysis software, e.g., WinRoof™ (Mitani Corp.), and measuring the area within each individual contour, calculating the circle-equivalent mean diameter of each individual carbon fibrous structure, and then, averaging the calculated data.

The circle-equivalent mean diameter may become a factor by which the maximum length of a carbon fibrous structure upon combining with the fluorine resin is determined. In general, when the circle-equivalent mean diameter is not more than 50 $\mu$m, the electrical conductivity of the obtained composite may not be expected to reach a sufficient level, while when it exceeds 100 $\mu$m, an undesirable increase in viscosity may be expected to happen upon kneading of the carbon fibrous structures in the fluorine resin. The increase in viscosity may be followed by failure of dispersion of the carbon fibrous structures into the fluorine resin, or inferiority of moldability.

As mentioned above, the carbon fibrous structure according to the present invention has the configuration where the fine carbon fibers existing in three dimensional network state are bound together by the granular part (s) so that the carbon fibers are externally elongated from the granular part(s). When two or more granular parts are present in a carbon fibrous structure, wherein each granular part binds the fibers so as to form the three dimensional network, the mean distance between adjacent granular parts may be, for example, 0.5 - 300 $\mu$m, preferably, 0.5 - 100 $\mu$m, and more preferably, 1 - 50 $\mu$m. The distance between adjacent granular parts used herein is determined by measuring distance from the center of a granular part to the center of another granular part which is adjacent the former granular part. When the mean distance between the granular parts is less than 0.5 $\mu$m, a configuration where the carbon fibers form an inadequately developed three dimensional network may be obtained. Therefore, it may become difficult to form good electrically conductive paths when the carbon fiber structures each having such an inadequately developed three dimensional network are added and dispersed to the fluorine resin. Meanwhile, when the mean distance exceeds 300 $\mu$m, an undesirable increase in viscosity may be expected to happen upon adding and dispersing the carbon fibrous structures in the fluorine resin. The increase in viscosity may result in an inferior dispersibility of the carbon fibrous structures to the fluorine resin.

Furthermore, the carbon fibrous structure to be used in the present invention may exhibit a bulky, loose form in which the carbon fibers are sparsely dispersed, because the carbon fibrous structure is comprised of carbon fibers that are configured as a three dimensional network and are bound together by a granular part so that the carbon fibers are elongated outwardly from the granular part as mentioned above. It is desirable that the bulk density thereof is in the range of 0.0001 - 0.05 g/cm$^3$, more preferably, 0.001 - 0.02 g/cm$^3$. When the bulk density exceeds 0.05 g/cm$^3$, it would become difficult to give the conductivity to the fluorine resin with a small dosage.

Furthermore, a carbon fibrous structure to be used in the present invention can enjoy good electric properties in itself, since the carbon fibers configured as a three dimensional network in the structure are bound together by a granular part produced in the growth process of the carbon fibers as mentioned above. For instance, it is desirable that a carbon fibrous structure to be used in the present invention has a powder electric resistance determined under a certain pressed density, 0.8 g/cm$^3$, of not more than 0.02 $\Omega\cdot$ cm, more preferably, 0.001 to 0.010 $\Omega\cdot$ cm. If the particle's resistance exceeds 0.02 $\Omega\cdot$ cm, it may become difficult to form good electrically conductive paths when the structures are added to the fluorine resin.

In order to enhance the strength and electric conductivity of the carbon fibrous structure used in the present invention, it is desirable that the graphene sheets that make up the carbon fibers have a small number of defects, and more specifically, for example, the $I_D/I_G$ ratio of the carbon fiber determined by Raman spectroscopy is not more than 0.2, more preferably, not more than 0.1. Incidentally, in Raman spectroscopic analysis, with respect to a large single crystal graphite, only the peak (G band) at 1580 cm$^{-1}$ appears. When the crystals are of finite ultrafine sizes or have any lattice defects, the peak (D band) at 1360 cm$^{-1}$ can appear. Therefore, when the intensity ratio ($R=I_{1360}/I_{1580}=I_D/I_G$) of the D band and the G band is below the selected range as mentioned above, it is possible to say that there is little defect in graphene sheets.

Furthermore, it is desirable that the carbon fibrous structure to be used in the present invention has a combustion initiation temperature in air of not less than 750 °C, preferably, 800 °C - 900 °C. Such a high thermal stability would be brought about by the above mentioned facts that it has little defects and that the carbon fibers have a predetermined outside diameter.

A carbon fibrous structure having the above described, desirable configuration may be prepared as follows, although it is not limited thereto.

Basically, an organic compound such as a hydrocarbon is chemical thermally decomposed through the CVD process in the presence of ultrafine particles of a transition metal as a catalyst in order to obtain a fibrous structure (hereinafter referred to as an "intermediate"), and then the intermediate thus obtained undergoes a high temperature heating treatment.

As a raw material organic compound, hydrocarbons such as benzene, toluene, xylene; carbon monoxide (CO); and alcohols such as ethanol may be used. It is preferable, but not limited, to use as carbon sources at least two carbon compounds which have different decomposition temperatures. Incidentally, the words "at least two carbon compounds" used herein not only include two or more kinds of raw materials, but also include one kind of raw material that can undergo a reaction, such as hydrodealkylation of toluene or xylene, during the course of synthesis of the fibrous structure such that in the subsequent thermal decomposition procedure it can function as at least two kinds of carbon compounds having different decomposition temperatures.

When as the carbon sources at least two kinds of carbon compounds are provided in the thermal decomposition reaction system, the decomposition temperatures of individual carbon compounds may be varied not only by the kinds of the carbon compounds, but also by the gas partial pressures of individual carbon compounds, or molar ratio between the compounds. Therefore, as the carbon compounds, a relatively large number of combinations can be used by adjusting the composition ratio of two or more carbon compounds in the raw gas.

For example, the carbon fibrous structure to be used in the present invention can be prepared by using two or more carbon compounds in combination, while adjusting the gas partial pressures of the carbon compounds so that each compound performs mutually different decomposition temperature within a selected thermal decomposition reaction temperature range, and/or adjusting the residence time for the carbon compounds in the selected temperature region, wherein the carbon compounds to be selected are selected from the group consisting of alkanes or cycloalkanes such as methane, ethane, propanes, butanes, pentanes, hexanes, heptane, cyclopropane, cycrohexane, particularly, alkanes having 1 -7 carbon atoms; alkenes or cycloolefin such as ethylene, propylene, butylenes, pentenes, heptenes, cyclopentene, particularly, alkenes having 1 - 7 carbon atoms; alkynes such as acetylene, propyne, particularly, alkynes having 1 - 7 carbon atoms; aromatic or heteroaromatic hydrocarbons such as benzene, toluene, styrene, xylene, naphthalene, methyl naphtalene, indene, phenanthrene, particularly, aromatic or heteroaromatic hydrocarbons having 6 -18 carbon atoms; alcohols such as methanol, ethanol, particularly, alcohols having 1 -7 carbon atoms; and other carbon compounds involving such as carbon monoxide, ketones, ethers. Further, to optimize the mixing ratio can contribute to the efficiency of the preparation.

When a combination of methane and benzene is utilized among such combinations of two or more carbon compounds, it is desirable that the molar ratio of methane/benzene is >1 - 600, preferably, 1.1 - 200, and more preferably 3 -100. The ratio is for the gas composition ratio at the inlet of the reaction furnace. For instance, when as one of carbon sources toluene is used, in consideration of the matter that 100% of the toluene decomposes into methane and benzene in proportions of 1:1 in the reaction furnace, only a deficiency of methane may be supplied separately. For example, in the case of adjusting the methane / benzene molar ratio to 3, 2 mol methane may be added to 1 mol toluene. As the methane to be added to the toluene, it is possible to use the methane which is contained as an unreacted form in the exhaust gas discharged from the reaction furnace, as well as a freshmethane specially supplied.

Using the composition ratio within such a range, it is possible to obtain the carbon fibrous structure in which both the carbon fiber parts and granular parts are efficiently developed.

Inert gases such as argon, helium, xenon; and hydrogen may be used as an atmosphere gas.

A mixture of transition metal such as iron, cobalt, molybdenum, or transition metal compounds such as ferrocene, metal acetate; and sulfur or a sulfur compound such as thiophene, ferric sulfide; may be used as a catalyst.

The intermediate may be synthesized using a CVD process with hydrocarbon or etc., which has been conventionally used in the art. The steps may comprise gasifying a mixture of hydrocarbon and a catalyst as a raw material, supplying the gasified mixture into a reaction furnace along with a carrier gas such as hydrogen gas, etc., and undergoing thermal decomposition at a temperature in the range of 800 °C - 1300 °C. By following such synthesis procedures, the product obtained is an aggregate, which is of several to several tens of centimeters in size and which is composed of plural carbon fibrous structures (intermediates), each of which has a three dimensional configuration where fibers having 15 - 100 nm in outside diameter are bound together by a granular part that has grown around the catalyst particle as the nucleus.

The thermal decomposition reaction of the hydrocarbon raw material mainly occurs on the surface of the catalyst particles or on growing surface of granular parts that have grown around the catalyst particles as the nucleus, and the fibrous growth of carbon may be achieved when the recrystallization of the carbons generated by the decomposition progresses in a constant direction. When obtaining carbon fibrous structures according to the present invention, however, the balance between the thermal decomposition rate and the carbon fiber growth rate is intentionally varied. Namely, for instance, as mentioned above, to use as carbon sources at least two kinds of carbon compounds having different decomposition temperatures may allow the carbonaceous material to grow three dimensionally around the granular part as a centre, rather than in one dimensional direction. The three dimensional growth of the carbon fibers depends not only on the balance between the thermal decomposition rate and the growing rate, but also on the selectivity of the crystal face of the catalyst particle, residence time in the reaction furnace, temperature distribution in the furnace, etc. The balance between the decomposition rate and the growing rate is affected not only by the kinds of carbon sources mentioned above, but also by reaction temperatures, and gas temperatures, etc. Generally, when the growing rate is faster than the decomposition rate, the carbon material tends to grow into fibers, whereas when the thermal decomposition rate is faster than the growing rate, the carbon material tends to grow in peripheral directions of the catalyst particle. Accordingly, by changing the balance between the thermal decomposition rate and the growing rate intentionally, it is possible to control the growth of carbon material to occur in multi-direction rather than in single direction, and to produce three dimensional structures that are related to the present invention. In order to form the above mentioned three-dimensional configuration, where the fibers are bound together by a granular part, with ease, it is desirable to optimize the compositions such as the catalyst used, the residence time in the reaction furnace, the reaction temperature and the gas temperature.

With respect to the method for preparing the carbon fibrous structure to be used in the present invention with efficiency, as another approach to the aforementioned one that two or more carbon compounds which have mutually different decomposition temperature are used in an appropriate mixing ratio, there is an approach that the raw material gas supplied into the reaction furnace from a supply port is forced to form a turbulent flow in proximity to the supply port. The "turbulent flow" used herein means a furiously irregular flow, such as flow with vortexes.

In the reaction furnace, immediately after the raw material gas is supplied into the reaction furnace from the supply port, metal catalyst fine particles are produced by the decomposition of the transition metal compound as the catalyst involved in the raw material gas. The production of the fine particles is carried out through the following steps. Namely, at first, the transition metal compound is decomposed to make metal atoms, then, plural number of, for example, about one hundred of metal atoms come into collisions with each other to create a cluster. At the created cluster state, it can not function as a catalyst for the fine carbon fiber. Then, the clusters further are aggregated by collisions with each other to grow into a metal crystalline particle of about 3 - 10 nm in size, and which particle comes into use as the metal catalyst fine particle for producing the fine carbon fiber.

During the catalyst formation process as mentioned above, if the vortex flows belonging to the furiously turbulent flow are present, it is possible that the collisions of metal atoms or collisions of clusters become more vigorously as compared with the collisions only due to the Brownian movement of atoms or collisions, and thus the collision frequency per unit time is enhanced so that the metal catalyst fine particles are produced within a shorter time and with higher efficiency. Further, since concentration, temperature, etc. are homogenized by the force of vortex flow, the obtained metal catalyst fine particles become uniform in size. Additionally, during the process of producing metal catalyst fine particles, a metal catalyst particles' aggregate in which numerous metal crystalline particles was aggregated by vigorous collisions with the force of vortex flows can be also formed. Since the metal catalyst particles are rapidly produced as mentioned above, the decomposition of carbon compound can be accelerated so that an ample amount of carbonaceous material can be provided. Whereby, the fine carbon fibers grow up in a radial pattern by taking individual metal catalyst particles in the aggregate as nuclei. When the thermal decomposition rate of a part of carbon compounds is faster than the growing rate of the carbon material as previously described, the carbon material may also grow in the circumferential direction so as to form the granular part around the aggregate, and thus the carbon fiber structure of the desired three dimensional configuration may be obtained with efficiency. Incidentally, it may be also considered that there is a possibility that some of the metal catalyst fine particles in the aggregate are ones that have a lower activity than the other particles or ones that are deactivated on the reaction. If non-fibrous or very short fibrous carbon material layers grown by such catalyst fine particles before or after the catalyst fine particles aggregate are present at the circumferential area of the aggregate, the granular part of the carbon fiber structure to be used in the present invention may be formed.

The concrete means for creating the turbulence to the raw material gas flow near the supply port for the raw material gas is not particularly limited. For example, it is adaptable to provide some type of collision member at a position where the raw material gas flow introduced from the supply port can be interfered by the collision section. The shape of the collision section is not particularly limited, as far as an adequate turbulent flow can be formed in the reaction furnace by the vortex flow which is created at the collision section as the starting point. For example, embodiments where various shapes of baffles, paddles, tapered tubes, umbrella shaped elements, etc., are used singly or in varying combinations and located at one or more positions may be adaptable.

The intermediate, obtained by heating the mixture of the catalyst and hydrocarbon at a constant temperature in the range of 800 °C - 1300°C, has a structure that resembles sheets of carbon atoms laminated together, (and being still in a half-raw, or incomplete condition). When analyzed with Raman spectroscopy, the D band of the intermediate is very large and many defects are observed. Further, the obtained intermediate is associated with unreacted raw materials, nonfibrous carbon, tar moiety, and catalyst metal.

Therefore, the intermediate is subjected to a high temperature heat treatment at 2400 - 3000 °C using a proper method in order to remove such residues from the intermediate and to produce the intended carbon fibrous structure with few defects.

For instance, the intermediate may be heated at 800 - 1200 °C to remove the unreacted raw material and volatile flux such as the tar moiety, and thereafter annealed at a high temperature of 2400 - 3000 °C to produce the intended structure and, concurrently, to vaporize the catalyst metal, which is included in the fibers, to remove it from the fibers. In this process, it is possible to add a small amount of a reducing gas and carbon monoxide into the inert gas atmosphere to protect the carbon structures.

By annealing the intermediate at a temperature of 2400 - 3000 °C, the patch-like sheets of carbon atoms are rearranged to associate mutually and then form multiple graphene sheet-like layers.

After or before such a high temperature heat treatment, the aggregates may be subjected to crushing in order to obtain carbon fibrous structures, each having an area-based circle-equivalent mean diameter of several centimeters. Then, the obtained carbon fibrous structures may be subjected to pulverization in order to obtain the carbon fibrous structures having an area-based circle-equivalent mean diameter of 50 - 100 $\mu$m. It is also possible to perform the pulverization directly without crushing. On the other hand, the initial aggregates involving plural carbon fibrous structures to be used in the present invention may also be granulated for adjusting shape, size, or bulk density to one's suitable for using a particular application. More preferably, in order to utilize effectively the above structure formed from the reaction, the annealing would be performed in a state such that the bulk density is low (the state that the fibers are extended as much as they can and the voidage is sufficiently large). Such a state may contribute to improved electric conductivity of the fluorine resin.

(2) Fluorine resin powder, and fluorine resin molded article

Next, the fluorine resin powder which constitutes the fluorine resin molded article according to the present invention, and the fluorine resin molded article which is produced by molding the mixed powder of the fluorine resin powder and the above mentioned carbon fibrous structures into an article and baking the article, will be described in detail.

The fluorine resin powder used in the present invention is not particularly limited, and may be any one of conventionally known fluorine resins as long as the resin is made into its powdery form. It is preferable, however, to use a mixed powder of large diameter particles' ingredient of not less than 100 $\mu$m in diameter, and small particles' ingredient of less than 100 $\mu$m in diameter, at a ratio of 5 -100 % by weight large particles to the remainder small particles, based on the total weight of the fluorine resin powder.

Nevertheless, when excessively large diameter particles are used, a possibility of causing a bad appearance of the molded article after molding may arise. Therefore, it is more preferable that the particle diameter of the large diameter particles is in the range of 100 - 1000 $\mu$m, particularly, in the range of 100 - 500 $\mu$m. Further, when such large diameter particles are contained at a rate of 60 -100 % by weight based on the total weight of the fluorine resin powder, the particularly superior conductivity giving effect will be expected. The content of the large diameter particles is determined via a separation method of utilizing generally used sieves or the like.

As the fluorine resin to be used, for instance, polytetrafluoroethylene, modified polytetrafluoroethylene which is prepared by copolymerizing perfluoroalkoxy divinyl ether with the polytetrafluoroethylene, and modified polytetrafluoroethylene which is prepared by copolymerizing hexafluoropropylene with the polytetrafluoroethylene, etc., are preferable.

Although the content of the carbon fibrous structures as mentioned above to such a fluorine resin is not particularly limited, for instance, it is preferable that the content of the carbon fibrous structures is in the range of 0.01 - 30.0 % by weight based on the total weight of the molded article. When the content of the carbon fibrous structures is less than 0.01%, a fear that the sufficient quantity of the conductive paths are not formed and thus the substantial conductivity is not given will arise. Contrary to this, as far as the specific carbon fibrous structures as described above are used as the conductivity giving agent, the content of up to 30 % is adequate for the conductivity improvement, and the amount of more than 30% can not bring a further improvement appropriate to the increment, and thus it is not economical way. In addition, a fear that adverse influence to the moldability may arise.

Next, the manufacturing procedure of the fluorine resin molded article according to the present invention will be described.

First, the fluorine resin mixed powder which contains the above mentioned large diameter particles of the fluorine resin and the above mentioned small diameter particles of the fluorine resin at a prescribed mixing ratio, and the above mentioned carbon fibrous structures are added to a kneading machine, for instance, Henschel mixer (manufactured by Mitsui Mitsuike Chemical Plants Co. Ltd.), and then mixed sufficiently in order to prepare a mixture. Then, the mixture is charged into a prescribed molding die, and compressed with a press molder in order to produce a preformed article. As the compression condition for the preformed article, 10 - 70 MPa is preferable, and 30 - 50 MPa is more preferable. Thereafter, the obtained preformed article is baked at 300 - 450 °C, preferably, at 340 °C or more, in order to obtain the fluorine resin molded article according to the present invention.

**EXAMPLES**

Hereinafter, this invention will be illustrated in detail by practical examples. However, the invention is not limited to the following examples.

The respective physical properties illustrated later are measured by the following protocols.

<Area based circle-equivalent mean diameter>

First, a photograph of pulverized product was taken with SEM. On the taken SEM photo, only carbon fibrous structures with a clear contour were taken as objects to be measured, and broken ones with unclear contours were omitted. Using all carbon fibrous structures that can be taken as objects in one single field of view (approximately, 60 - 80 pieces), about 200 pieces in total were measured with three fields of views. Contours of the individual carbon fibrous structures were traced using the image analysis software, WinRoof ™ (trade name, marketed by Mitani Corp.), and area within each individual contour was measured, circle-equivalent mean diameter of each individual carbon fibrous structure was calculated, and then, the calculated data were averaged to determine the area based circle-equivalent mean diameter.

<Measurement of Bulk density>

1 g of powder was placed into a 70 mm caliber transparent cylinder equipped with a distribution plate, then air supply at 0.1 Mpa of pressure, and 1.3 liter in capacity was applied from the lower side of the distribution plate in order to blow off the powder and thereafter allowed the powder to settle naturally. After the fifth air blowing, the height of the settled powder layer was measured. Any 6 points were adopted as the measuring points, and the average of the 6 points was calculated in order to determine the bulk density.

<Raman spectroscopic analysis>

The Raman spectroscopic analysis was performed with the equipment LabRam 800 manufactured by HORIBA JOBIN YVON, S.A.S., and using 514 nm the argon laser.

<TG combustion temperature>

Combustion behavior was determined using TG-DTA manufactured by MAC SCIENCE CO. LTD., at air flow rate of 0.1 liter/minute and heating rate of 10°C/minute. When burning, TG indicates a quantity reduction and DTA indicates an exothermic peak. Thus, the top position of the exothermic peak was defined as the combustion initiation temperature.

<X ray diffraction>

Using the powder X ray diffraction equipment (JDX3532, manufactured by JEOL Ltd.), carbon fibrous structures after annealing processing were examined. $K\alpha$ ray which was generated with Cu tube at 40 kV, 30 mA was used, and the measurement of the spacing was performed in accordance with the method defined by The Japan Society for the Promotion of Science (JSPS), described in "Latest Experimental Technique For Carbon Materials (Analysis Part)", Edited by Carbon Society of Japan, 2001), and as the internal standard silicon powder was used.

<Particle's resistance and decompressibility>

1 g of CNT powder was scaled, and then press-loaded into a resinous die (inner dimensions: 40 L, 10 W, 80 H (mm)), and the displacement and load were read out. A constant current was applied to the powder by the four-terminal method, and in this condition the voltage was measured. After measuring the voltage until the density come to 0.9g/cm$^3$, the applied pressure was released and the density after decompression was measured. Measurements taken when the powder was compressed to 0.5, 0.8 or 0.9 g/cm$^3$ were adopted as the particle's resistance.

<Mean diameter and roundness of the granular part, and ratio of the granular part to the fine carbon fiber>

First, a photograph of the carbon fibrous structures was taken with SEM in an analogous fashion as in the measurement of area based circle-equivalent mean diameter. On the taken SEM photo, only carbon fibrous structures with a clear contour were taken as objects to be measured, and broken ones with unclear contours were omitted. Using all carbon fibrous structures that can be taken as objects in one single field of view (approximately, 60 - 80 pieces), about 200 pieces in total were measured with three fields of views.

On the carbon fibrous structures to be measured, assuming each individual granular part which is the binding point of carbon fibers to be a particle, contours of the individual granular parts were traced using the image analysis software, WinRoof™ (trade name, marketed by Mitani Corp.), and area within each individual contour was measured, circle-equivalent mean diameter of each individual granular part was calculated, and then, the calculated data were averaged to determine the area based circle-equivalent mean diameter. Roundness (R) was determined by inputting value of the area(A) within each individual contour computed by the above and a measured value of each individual contour's length (L) to the following equation to calculate the roundness of each individual granular part, and then, averaging the calculated data.

[Numerical Formula 1]

$$R = A * 4\pi / L^2$$

Further, the outer diameter of the fine carbon fibers in the individual carbon fibrous structures to be measured were determined, and then, from the outer diameter determined and the circle-equivalent mean diameter of the granular part calculated as above, the ratio of circle-equivalent mean diameter to the outer diameter of the fine carbon fiber was calculated for each individual carbon fibrous structure, and then the data obtained are averaged.

<Mean distance between granular parts>

First, a photograph of the carbon fibrous structures was taken with SEM in an analogous fashion as in the measurement of area based circle-equivalent mean diameter. On the taken SEM photo, only carbon fibrous structures with a clear contour were taken as objects to be measured, and broken ones with unclear contours were omitted. Using all carbon fibrous structures that can be taken as objects in one single field of view (approximately, 60 - 80 pieces), about 200 pieces in total were measured with three fields of views.

On the carbon fibrous structures to be measured, all places where the granular parts were mutually linked with a fine carbon fiber were found out. Then, at the respective places, the distance between the adjacent granular parts which were mutually linked with the fine carbon fiber (the length of the fine carbon fiber including the center of a granular part at one end to the center of another granular part at another end) was measured, and then the data obtained were averaged.

<Destruction test for carbon fibrous structure>

To 100ml of toluene in a lidded vial, the carbon fiber structures were added at a rate of 30 μg/ml in order to prepare the dispersion liquid sample of the carbon fibrous structure.

To the dispersion liquid sample of the carbon fibrous structure thus prepared, Ultrasound was applied using a ultrasonic cleaner (manufactured by SND Co., Ltd., Trade Name: USK-3) of which generated frequency was 38 kHz and power was 150 w, and the change of the carbon fibrous structure in the dispersion liquid was observed in the course of time aging.

First, 30 minutes after the application of ultrasound was started, a 2 ml constant volume aliquot of the dispersion sample was pipetted, and the photo of the carbon fibrous structures in the aliquot was taken with SEM. On the obtained SEM photo, 200 pieces of fine carbon fibers in the carbon fibrous structures (fine carbon fibers at least one end of which is linked to the granular part) were selected randomly, then the length of the each individual selected fine carbon fibers was measured, and mean length $D_{50}$ was calculated. The mean length calculated is taken as the initial average fiber length.

Meanwhile, on the obtained SEM photo, 200 pieces of granular parts which each were the binding point of carbon fibers in the carbon fibrous structures were selected randomly. Assuming each individual selected granular part to be a particle, contours of the individual granular parts were traced using the image analysis software, WinRoof™ (trade name, marketed by Mitani Corp.), and area within each individual contour was measured, circle-equivalent mean diameter of each individual granular part was calculated, and then, $D_{50}$ mean value thereof is calculated. The $D_{50}$ mean value calculated was taken as the initial average diameter of the granular parts.

Thereafter, according to the same procedure, a 2 ml constant volume aliquot of the dispersion sample was pipetted every constant periods, and the photo of the carbon fibrous structures in the each individual aliquot was taken with SEM, and the mean length $D_{50}$ of the fine carbon fibers in the carbon fibrous structure and the mean diameter $D_{50}$ of the granular part in the carbon fibrous structure were calculated individually.

At the time when the mean length $D_{50}$ of the fine carbon fibers comes to be about half the initial average fiber length (in the following Examples, 500 minutes after the application of ultrasound is stated.), the mean diameter $D_{50}$ of the granular part was compared with the initial average diameter of the granular parts in order to obtain the rate of variability (%) thereof.

(1) Synthetic Example 1 for carbon fibrous structures used in the present invention

By the CVD process, carbon fibrous structures were synthesized from toluene as the raw material.
The synthesis was carried out in the presence of a mixture of ferrocene and thiophene as the catalyst, and under the reducing atmosphere of hydrogen gas. Toluene and the catalyst were heated to 380 °C along with the hydrogen gas, and then they were supplied to the generation furnace, and underwent thermal decomposition at 1250 °C in order to obtain the carbon fibrous structures (first intermediate).

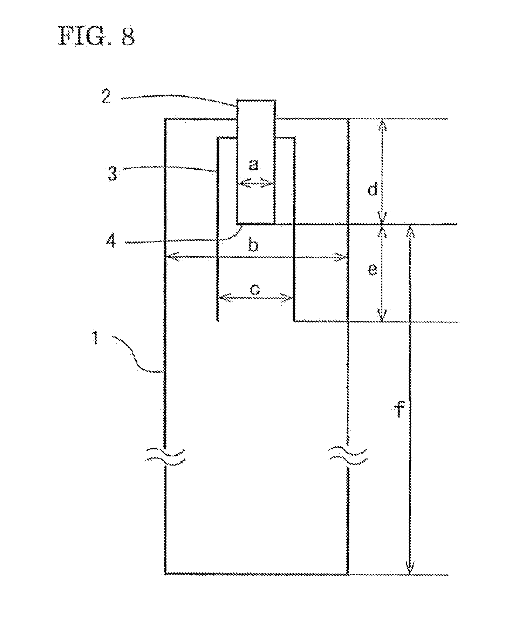

The generation furnace used for the carbon fibrous structures (first intermediate) is illustrated schematically in Fig. 8. As shown in Fig. 8, the generation furnace 1 was equipped at the upper part thereof with a inlet nozzle 2 for introducing the raw material mixture gas comprising toluene, catalyst and hydrogen gas as aforementioned into the generation furnace 1. Further, at the outside of the inlet nozzle 2, a cylindrical-shaped collision member 3 was provided. The collision member 3 was set to be able to interfere in the raw material gas flow introduced from the raw material supply port 4 located at the lower end of the inlet nozzle 2. In the generation furnace 1 used in this Example, given that the inner diameter of the inlet nozzle 2, the inner diameter of the generation furnace 1, the inner diameter of the cylindrical-shaped collision member 3, the distance from the upper end of the generation furnace 1 to the raw material mixture gas supply port 4, the distance from the raw material mixture gas supply port 4 to the lower end of the collision member 3, and the distance from the raw material mixture gas supply port 4 to the lower end of the generation furnace 1 were "a", "b", "c", "d", "e", and "f", respectively, the ratio among the above dimensions was set as a:b:c:d:e:f = 1.0:3.6:1.8:3.2:2.0: 21.0. The raw material gas supplying rate to the generation furnace was 1850 NL/min., and the pressure was 1.03 atms.

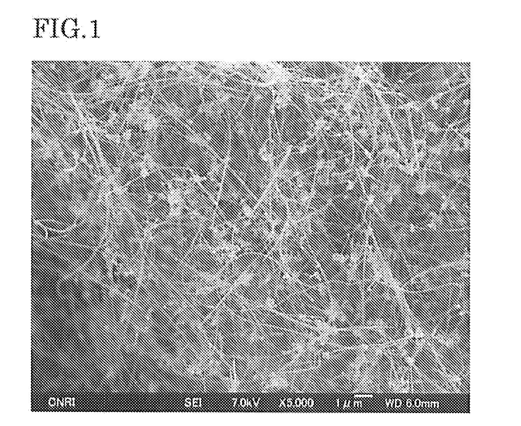

The synthesized first intermediate was baked at 900 °C in nitrogen gas in order to remove hydrocarbons such as tar and to obtain a second intermediate. The R value of the second intermediate measured by the Raman spectroscopic analysis was found to be 0.98. Sample for electron microscopes was prepared by dispersing the first intermediate into toluene. Figs. 1 and 2 show SEM photo and TEM photo of the sample, respectively.

Further, the second intermediate underwent a high temperature heat treatment at 2600 °C. The obtained aggregates of the carbon fibrous structures underwent pulverization using an air flow pulverizer in order to produce the carbon fibrous structures to be used in the present invention.

A sample for electron microscopes was prepared by dispersing ultrasonically the obtained carbon fibrous structures into toluene. Fig. 3, and Figs. 4A and 4B show SEM photo and TEM photos of the sample, respectively.

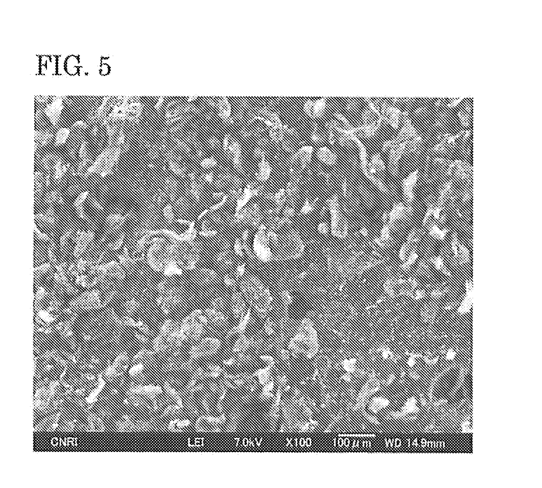

Fig. 5 shows SEM photo of the obtained carbon fibrous structures as mounted on a sample holder for electron microscope, and Table 1 shows the particle distribution of obtained carbon fibrous structures.

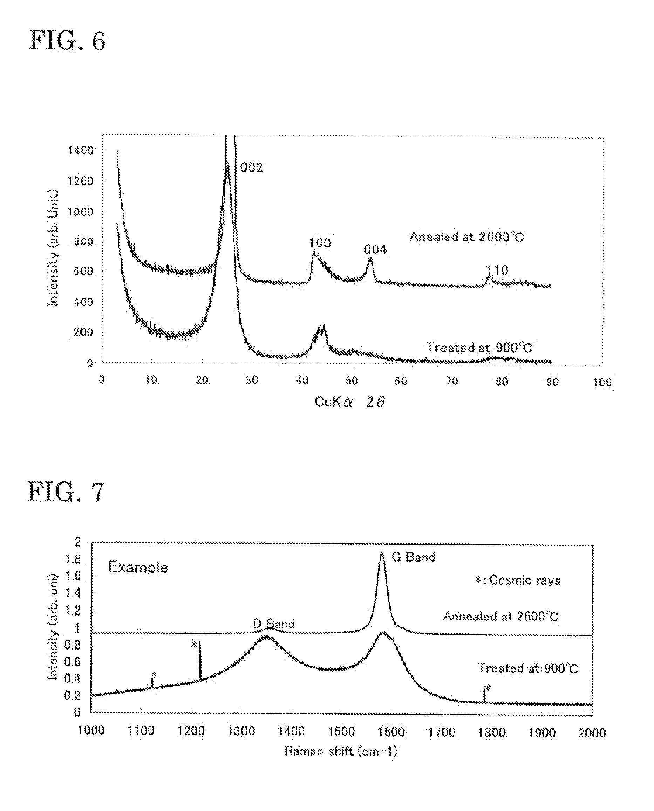

Further, X-ray diffraction analysis and Raman spectroscopic analysis were performed on the carbon fibrous structure before and after the high temperature heat treatment in order to examine changes in these analyses. The results are shown in Figs. 6 and 7, respectively.

Additionally, it was found that the carbon fibrous structures had an area based circle-equivalent mean diameter of 72.8 $\mu$m, bulk density of 0.0032 g/cm$^3$, Raman $I_D/I_G$ ratio of 0.090, TG combustion temperature of 786 °C, spacing of 3.383 angstroms, particle's resistance of 0.0083 $\Omega$·cm, and density after decompression of 0.25 g/cm$^3$.

The mean diameter of the granular parts in the carbon fibrous structures was determined as 443 nm (SD 207 nm), that is 7.38 times larger than the outer diameter of the carbon fibers in the carbon fibrous structure. The mean roundness of the granular parts was 0.67 (SD 0.14).

Further, when the destruction test for carbon fibrous structure was performed according to the above mentioned procedure, the initial average fiber length ($D_{50}$) determined 30 minutes after the application of ultrasound was started was found to be 12.8 $\mu$m, while the mean length $D_{50}$ determined 500 minutes after the application of ultrasound was started was found to be 6. 7 $\mu$m, which value was about half the initial value. This result showed that many breakages were given in the fine carbon fibers of the carbon fibrous structure. Whereas the variability (decreasing) rate for the diameter of granular part was only 4.8%, when the mean diameter ($D_{50}$) of the granular part determined 500 minutes after the application of ultrasound was started was compared with the initial average diameter ($D_{50}$) of the granular parts determined 30 minutes after the application of ultrasound was started. Considering measurement error, etc., it was found that the granular parts themselves were hardly destroyed even under the load condition that many breakages were given in the fine carbon fibers, and the granular parts still function as the binding site for the fibers mutually.

Table 2 provides a summary of the various physical properties as determined in Synthetic Example 1.

[Table 1]

| Particle Distribution (pieces) | Synthetic Example 1 |
|---|---|
| <50 $\mu$m | 49 |
| 50 $\mu$m to <60 $\mu$m | 41 |
| 60 $\mu$m to <70 $\mu$m | 34 |
| 70 $\mu$m to <80 $\mu$m | 32 |
| 80 $\mu$m to <90 $\mu$m | 16 |
| 90 $\mu$m to <100 $\mu$m | 12 |
| 100 $\mu$m to <110 $\mu$m | 7 |
| >110 $\mu$m | 16 |
| Area based circle-equivalent mean diameter | 72.8 $\mu$m |

[Table 2]

| | Synthetic Example 1 |
|---|---|
| Area based circle-equivalent mean diameter | 72.8 $\mu$m |
| Bulk density | 0.0032g/cm$^3$ |
| $I_D/I_G$ ratio | 0.090 |
| TG combustion temperature | 786 °C |
| Spacing for (002) faces | 3.383 Å |
| Particle's resistance at 0.5 g/cm$^3$ | 0.0173$\Omega$.cm |
| Particle's resistance at 0.8 g/cm$^3$ | 0.0096$\Omega$·cm |
| Particle's resistance at 0.9 g/cm$^3$ | 0.0083$\Omega$·cm |
| Density after decompression | 0.25g/cm$^3$ |

(2) Synthetic Example 2 for carbon fibrous structures used in the present invention

By the CVD process, carbon fibrous structures were synthesized using a part of the exhaust gas from the generation furnace as a recycling gas in order to use as the carbon source the carbon compounds such as methane, etc., included in the recycling gas, as well as a fresh toluene.

The synthesis was carried out in the presence of a mixture of ferrocene and thiophene as the catalyst, and under the reducing atmosphere of hydrogen gas. Toluene and the catalyst as a fresh raw material were heated to 380 °C along with the hydrogen gas in a preheat furnace, while a part of the exhaust gas taken out from the lower end of the generation furnace was used as a recycling gas. After it was adjusted to 380 °C, it was mixed with the fresh raw material gas on the way of the supplying line for the fresh raw material to the generation furnace. The mixed gas was then supplied to the generation furnace.

The composition ratio in the recycling gas used were found to be $CH_4$ 7.5%, $C_6H_6$ 0.3%, $C_2H_2$ 0.7%, $C_2H_6$ 0.1%, CO 0.3%, $N_2$ 3.5%, and $H_2$ 87.6% by the volume based molar ratio. The mixing flow rate was adjusted so that the mixing molar ratio of methane and benzene in the raw material gas to be supplied to the generation furnace, $CH_4/C_6H_6$ was set to 3.44 (wherein, it was considered that the toluene in the fresh raw material gas had been decomposed at 100% to $CH_4$: $C_6H_6$ = 1:1 by the heating in the preheat furnace.

In the final raw material gas, $C_2H_2$ , $C_2H_6$, and CO which were involved in the recycling gas to be mixed were naturally included. However, since these ingredients were very small amount, theymay substantially be ignored as the carbon source.

Then they were underwent thermal decomposition at 1250 °C in order to obtain the carbon fibrous structures (first intermediate) in an analogous fashion as Synthetic Example 1.

The constitution of the generation furnace used for the carbon fibrous structures (first intermediate) was the same as that shown in Fig. 8, except that the cylindrical- shaped collisionmember 3 was omitted. The rawmaterial gas supplying rate to the generation furnace was 1850 NL/min., and the pressure was 1.03 atms as in the case of Synthetic Example 1.

The synthesized first intermediate was baked at 900 °C in argon gas in order to remove hydrocarbons such as tar and to obtain a second intermediate. The R value of the second intermediate measured by the Raman spectroscopic analysis was found to be 0.83. Sample for electron microscopes was prepared by dispersing the first intermediate into toluene. SEM photo and TEM photo obtained for the sample are in much the same with those of Synthetic Example 1 shown in Figs. 1 and 2, respectively.

Further, the second intermediate underwent a high temperature heat treatment at 2600 °C in argon gas. The obtained aggregates of the carbon fibrous structures underwent pulverization using an air flow pulverizer in order to produce the carbon fibrous structures to be used in the present invention.
A sample for electron microscopes was prepared by dispersing ultrasonically the obtained carbon fibrous structures into toluene.
SEM photo and TEM photos obtained for the sample are in much the same with those of Synthetic Example 1 shown in Fig. 3 and Figs.4A and 4B, respectively.

Separately, the obtained carbon fibrous structures were mounted on a sample holder for electron microscope, and observed for the particle distribution. The obtained results are shown in Table 3.

Further, X-ray diffraction analysis and Raman spectroscopic analysis were performed on the carbon fibrous structure before and after the high temperature heat treatment in order to examine changes in these analyses. The results are in much the same with those of Synthetic Example 1 shown in Figs. 6 and 7, respectively.

Additionally, it was found that the carbon fibrous structures had an area based circle-equivalent mean diameter of 75.8 $\mu$m, bulk density of 0.004 g/cm$^3$, Raman $I_D/I_G$ ratio of 0.086, TG combustion temperature of 807 °C, spacing of 3.386 angstroms, particle's resistance of 0.0077 $\Omega$·cm, and density after decompression of 0.26 g/cm$^3$.

The mean diameter of the granular parts in the carbon fibrous structures was determined as 349.5 nm (SD 180.1 nm), that is 5.8 times larger than the outer diameter of the carbon fibers in the carbon fibrous structure. The mean roundness of the granular parts was 0.69 (SD 0.15).

Further, when the destruction test for carbon fibrous structure was performed according to the above mentioned procedure, the initial average fiber length ($D_{50}$) determined 30 minutes after the application of ultrasound was started was found to be 12.4 $\mu$m, while the mean length $D_{50}$ determined 500 minutes after the application of ultrasound was started was found to be 6.3 $\mu$m, which value was about half the initial value. This result showed that many breakages were given in the fine carbon fibers of the carbon fibrous structure. Whereas the variability (decreasing) rate for the diameter of granular part was only 4.2%, when the mean diameter ($D_{50}$) of the granular part determined 500 minutes after the application of ultrasound was started was compared with the initial average diameter ($D_{50}$) of the granular parts determined 30 minutes after the application of ultrasound was started. Considering measurement error, etc., it was found that the granular parts themselves were hardly destroyed even under the load condition that many breakages were given in the fine carbon, and the granular parts still function as the binding site for the fibers mutually.

Table 4 provides a summary of the various physical properties as determined in Synthetic Example 2.
[Table 3]

| Particle Distribution (pieces) | Synthetic Example 2 |
|---|---|
| <50 $\mu$m | 48 |
| 50 $\mu$m to <60 $\mu$m | 39 |
| 60 $\mu$m to <70 $\mu$m | 33 |
| 70 $\mu$m to <80 $\mu$m | 30 |
| 80 $\mu$m to <90 $\mu$m | 12 |
| 90 $\mu$m to <100 $\mu$m | 15 |
| 100 $\mu$m to <110 $\mu$m | 3 |
| >110 $\mu$m | 18 |
| Area based circle-equivalent mean diameter | 75.8 $\mu$m |

[Table 4]

| | Synthetic Example 2 |
|---|---|
| Area based circle-equivalent mean diameter | 75.8 $\mu$m |
| Bulk density | 0.004g/cm$^3$ |
| $I_D/I_G$ ratio | 0.086 |
| TG combustion temperature | 807 °C |
| Spacing for (002) faces | 3.386 Å |
| Particle's resistance at 0.5 g/cm$^3$ | 0.0161$\Omega$·cm |
| Particle's resistance at 0.8 g/cm$^3$ | 0.0089$\Omega$·cm |
| Particle's resistance at 0.9 g/cm$^3$ | 0.0077$\Omega$·cm |
| Density after decompression | 0.26g/cm$^3$ |

(3) Examples 1 - 8

As shown in Table 5, fluorine type resin powder and carbon fibrous structures synthesized in Synthetic Example 1 or 2 were installed into Henschel mixer (manufactured by Mitsui Mitsuike Chemical Plants Co. Ltd.), and then mixed under a rotation rate of 980 rpm for 10 minutes in order to prepare a mixture. Then, the mixture was charged into a cylindrical molding die, and compressed at a pressure of 50 MPa for 5 minutes in order to produce a preformed article. Thereafter, the obtained preformed article was heated up to 365 °C from the room temperature at a heating rate of 50 °C/minute, then kept at 365 °C for 4 hours, and thereafter, cooled to the room temperature at a cooling rate of 50 °C/minute. Thus, test pieces were obtained.
The surface resistivity of the respective test pieces were determined using LORESTA-AP (manufactured by Mitsubishi Chemical). The obtained results are shown in Table 5.
[Table 5]

| Sample | Fluorine resin powder | | | Conductivity | giving agent | Mixed Powder | Molded Article |
|---|---|---|---|---|---|---|---|
| | product Name | Mean particle diameter ($\mu$m) | Additive ratio (wt. %) | Product Name | Additive ratio (wt.%) | content of 100 ~1000 $\mu$m powder (wt.%) | Surface resistivity ($\Omega$/□) |
| Example 1 | G340 | 200 | 99 | CNT of Synthetic Example 1 | 1 | 64 | 4.20E+01 |
| Example 2 | G340 | 200 | 99 | CNT of Synthetic Example 2 | 1 | 64 | 3.30E+01 |
| Example 3 | G350 | 250 | 99 | CNT of Synthetic Example 1 | 1 | 83 | 5.30E+01 |
| Example 4 | G350 | 250 | 99 | CNT of Synthetic Example 2 | 1 | 83 | 3.50E+01 |
| Example 5 | 450HP-J | 300 | 99 | CNT of Synthetic Example 1 | 1 | 72 | 4.80E+01 |
| Example 6 | 450HP-J | 300 | 99 | CNT of Synthetic Example 2 | 1 | 72 | 3.50E+01 |
| Example 7 | M-392 | 700 | 99 | CNT of Synthetic Example 1 | 1 | 91 | 6.90E+01 |
| Example 8 | M-392 | 700 | 99 | CNT of Synthetic Example 2 | 1 | 91 | 5.50E+01 |

**Claims**

1. Fluorine resin formed article which is produced by molding a mixed powder comprising fluorine resin powder and carbon fibrous structures into an article and baking the article, wherein the carbon fibrous structure comprises a three dimensional network of carbon fibers each having an outside diameter of 15 - 100 nm, wherein the carbon fibrous structure further comprises a granular part with which the carbon fibers are tied together in the state that the concerned carbon fibers are externally elongated therefrom, and wherein the granular part is produced in a growth process of the carbon fibers.

2. The fluorine resin molded article according to Claim 1, wherein the carbon fibrous structures have an area-based circle-equivalent mean diameter of 50 - 100 $\mu$m.

3. The fluorine resin molded article according to Claim 1 or 2, wherein the carbon fibrous structures have a bulk density of 0.0001 - 0.05g/cm$^3$.

4. The fluorine resin molded article according to one of Claims 1 - 3, wherein the carbon fibrous structures have $I_D/I_G$ ratio determined by Raman spectroscopy of not more than 0.2.

5. The fluorine resin molded article according to one of Claims 1 - 4, wherein the carbon fibrous structures have a combustion initiation temperature in air of not less than 750 °C.

6. The fluorine resin molded article according to one of Claims 1 - 5, wherein the particle diameter of the granular part at a binding portion for carbon fibers is larger than the outside diameters of the carbon fibers.

7. The fluorine resin molded article according to one of Claims 1-6, wherein the carbon fibrous structures are produced using as carbon sources at least two carbon compounds which have mutually different decomposition temperatures.

8. The fluorine resin molded article according to one of Claims 1 - 7, wherein the carbon fibrous structures are contained at a rate of 0.01 - 30.0 % by weight based on the total weight of the fluorine resin molded article.

9. The fluorine resin molded article according to one of Claims 1 - 8, wherein the fluorine resin powder comprises large diameter particles' ingredient of not less than 100 $\mu$m in diameter, and small particles' ingredient of less than 100 $\mu$m in diameter, at a ratio of 5 -100 % by weight large particles to the remainder small particles, based on the total weight of the fluorine resin powder.

10. The fluorine resin molded article according to one of Claims 1 - 9, wherein the large diameter particles have a diameter of 100 - 1000 $\mu$m.

11. The fluorine resin molded article according to one of Claims 1 - 10, wherein the fluorine resin powder is at least one kind of powder selected from the group consisting of polytetrafluoroethylene, modified polytetrafluoroethylene which is prepared by copolymerizing perfluoroalkoxy divinyl ether with the polytetrafluoroethylene, and modified polytetrafluoroethylene which is prepared by copolymerizing hexafluoropropylene with the polytetrafluoroethylene.

FIG.1

FIG.2

FIG. 3

## FIG. 4A

## FIG. 4B

FIG. 5

FIG. 6

FIG. 7

FIG. 8

**EP 1 950 229 A1**

## INTERNATIONAL SEARCH REPORT

| International application No. |
| --- |
| PCT/JP2006/321123 |

A. CLASSIFICATION OF SUBJECT MATTER
*C08F14/26*(2006.01)i, *C01B31/00*(2006.01)i, *C08K7/04*(2006.01)i, *C08L27/18* (2006.01)i

According to International Patent Classification (IPC) or to both national classification and IPC

B. FIELDS SEARCHED

Minimum documentation searched (classification system followed by classification symbols)
C08F14/26, C01B31/00, C08K7/04, C08L27/18

Documentation searched other than minimum documentation to the extent that such documents are included in the fields searched
Jitsuyo Shinan Koho          1922-1996      Jitsuyo Shinan Toroku Koho    1996-2006
Kokai Jitsuyo Shinan Koho    1971-2006      Toroku Jitsuyo Shinan Koho    1994-2006

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X<br>A | JP 2004-176244 A  (Showa Denko Kabushiki Kaisha),<br>24 June, 2004 (24.06.04),<br>Full text<br>& WO 2004/044289 A1      & EP 1570119 A1<br>& US 2006/046051 A1 | 1,3,5,7-11<br>2,4,6 |
| A | WO 2004/038074 A1  (Bussan Nanotech Research Institute Inc.),<br>06 May, 2004 (06.05.04),<br>Full text<br>& US 2006/045837 A1 | 1-11 |

☒ Further documents are listed in the continuation of Box C.          ☐ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered   to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>    10 November, 2006 (10.11.06) | Date of mailing of the international search report<br>    21 November, 2006 (21.11.06) |
| --- | --- |
| Name and mailing address of the ISA/<br>    Japanese Patent Office | Authorized officer |
| Facsimile No. | Telephone No. |

Form PCT/ISA/210 (second sheet) (April 2005)

**INTERNATIONAL SEARCH REPORT**

International application No.

PCT/JP2006/321123

C (Continuation).   DOCUMENTS CONSIDERED TO BE RELEVANT

| Category* | Citation of document, with indication, where appropriate, of the relevant passages | Relevant to claim No. |
|---|---|---|
| A | WO 2005/095687 A1  (Bussan Nanotech Research Institute Inc.), 13 October, 2005 (13.10.05), Full text & JP 2006-111515 A      & US 2006/062715 A1 | 1-11 |
| P,X | JP 2006-083297 A  (Nichias Corp., Bussan Nanotech Research Institute Inc.), 30 March, 2006 (30.03.06), Full text (Family: none) | 1-11 |
| P,X | JP 2006-137937 A  (Showa Denko Kabushiki Kaisha), 01 June, 2006 (01.06.06), Full text & WO 2006/041186 A1 | 1,3-5,7-11 |
| P,X | JP 2006-089710 A  (Showa Denko Kabushiki Kaisha), 06 April, 2006 (06.04.06), Full text & WO 2005/100465 A1 | 1,3-5,8,11 |
| P,A | WO 2006/100877 A1  (Bussan Nanotech Research Institute Inc.), 28 September, 2006 (28.09.06), Full text & JP 2006-265751 A | 1-11 |
| P,A | JP 2006-183227 A  (Bussan Nanotech Research Institute Inc.), 13 July, 2006 (13.07.06), Full text & WO 2006/025462 A1      & US 2006/078730 A1 | 1-11 |

Form PCT/ISA/210 (continuation of second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003082187 A

**Non-patent literature cited in the description**

- Latest Experimental Technique For Carbon Materials (Analysis Part. 2001